# EUROPÄISCHE PATENTSCHRIFT

(11) **EP 2 929 988 B1**
(45) Veröffentlichungstag und Bekanntmachung des Hinweises auf die Patenterteilung: **16.01.2019**
(21) Anmeldenummer: 14164276.9
(22) Anmeldetag: 10.04.2014
(51) Int. Cl.: B25H 7/04, B26D 3/16

(54) **Markiervorrichtung für Rohrabschneider**
Marking device for a pipe cutter
Dispositif de marquage pour coupe-tubes

(43) Veröffentlichungstag der Anmeldung: 14.10.2015
(73) Patentinhaber: Heinzelmann, Stephan, 72293 Glatten (DE)
(72) Erfinder: Heinzelmann, Stephan, 72293 Glatten (DE)
(74) Vertreter: Stolmár & Partner Patentanwälte PartG mbB

(56) Entgegenhaltungen:
- EP-A1- 1 059 135
- EP-A1- 1 649 957
- DE-U1-202008 008 825
- US-A- 2 389 286

## Beschreibung

### Gebiet der Erfindung

Die Erfindung betrifft eine Markiervorrichtung eines Rohrabschneiders gemäß dem Oberbegriff des Anspruchs 1.

### Stand der Technik

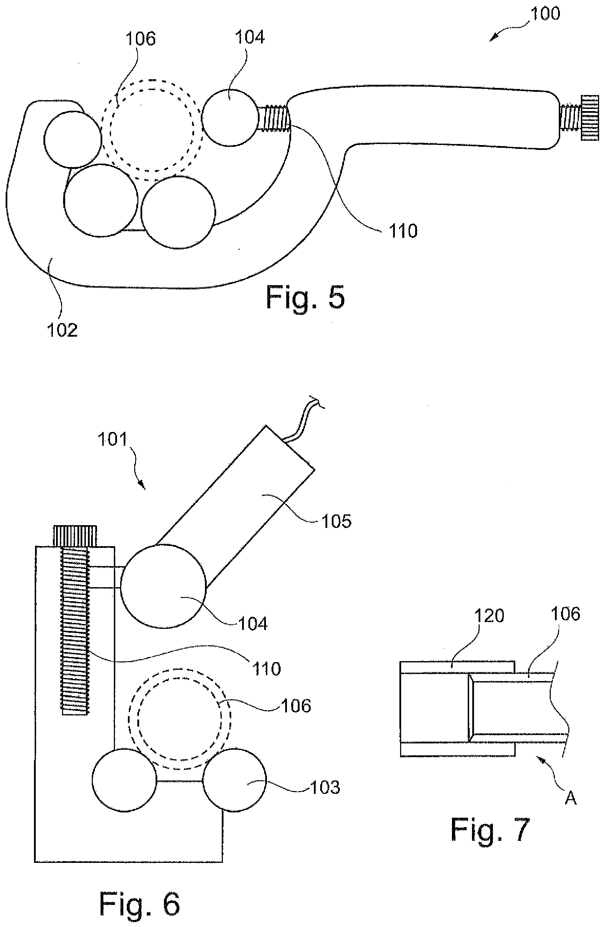

Ein Rohrabschneider 100 ist ein Handwerkzeug zum Trennen von Metallrohren (siehe Figur 5). Es besteht im Prinzip aus einem C-förmigen Eingriffselement 102, in dem Schneideräder 104 gelagert sind. Das Rohr 106 (durch gestrichelte Linien angedeutet) wird dabei in den C-förmigen Eingriffsteil 102 eingelegt und mit einer Gewindespindel 110 gegen die Schneideräder 104 gedrückt. Dann wird der Rohrabschneider 100 um das Rohr herum gedreht, wobei die Schneideräder 104 in die äußere Oberfläche des Rohrs 106 eindringen und die so entstehende Kerbe nach und nach vertieft wird, bis die gesamte Wandstärke des Rohrs 106 durchgetrennt ist.
Ebenfalls bekannt sind elektrische Rohrabschneider, wie schematisch einer beispielsweise in Figur 6 gezeigt ist. Bei diesen wird das Rohr 106 auf eine drehbare Lagerung 103 gelegt und mit einer elektrisch angetriebenen Schneidvorrichtung 101 geschnitten. Die Schneidvorrichtung 101 mit Schneidrad 104 und Handgriff 105 ist über eine Gewindespindel 110 ebenfalls verstellbar gelagert und kann so auf verschiedene Rohrdicken eingestellt werden.
Rohrabschneider werden verwendet, um saubere Endstücke zu erhalten, an die beispielsweise ein anderes Rohr dann über ein Verbindungsstück, bspw. eine Muffe oder ein Biegestück, anmontiert werden können. Insbesondere im Gebäudebau werden so Heizungs-, Wasser-, Gas- oder andere Rohre montiert.

Damit jedoch gewährleistet ist, dass das Verbindungsstück (Muffe, Biegestück) 120 auch ausreichend weit auf das Rohr 104 aufgesetzt wird und werden kann, wird das Verbindungsstück 120 auf das Ende des abgetrennten Rohres 104 gesteckt und am Rand des Verbindungsstücks 120 eine Markierung auf die äußere Oberfläche des Rohrs gezeichnet (siehe Pfeil A in Figur 7). Dann wird das Verbindungsstück 120 wieder vom Rohr 106 genommen und man kann feststellen, ob das Verbindungsstück 120 ausreichend weit auf das Rohr 106 gesetzt wurde.
Um feststellen zu können, dass die Länge der Überschneidung für einen festen Sitz des Verbindungsstücks auf dem Rohr ausreicht, muss der ausführende Handwerker ausreichend Erfahrung besitzen. Dies gilt insbesondere deshalb, weil die Länge, die das Verbindungsstück auf das Rohr aufgesetzt werden muss, vom Rohrdurchmesser abhängt. D.h. bei dickeren Rohren muss die Überschneidung von Verbindungsstück und Rohr größer sein. Wenn eine angemessene Position mit ausreichender Überschneidung angezeichnet wurde, wird das Verbindungsstück wieder auf das Rohr geschoben und durch Verpressen des Verbindungsstücks mit dem Rohr darauf fixiert. Danach kann dann ein weiteres Rohr (nicht gezeigt) in das offene Ende der Verbindungsmuffe eingesetzt und ebenfalls verpresst werden. Das Problem ist dabei, dass zum einen der ausführende Handwerker ausreichende Erfahrung besitzen muss, zum anderen dass auch mehrere Arbeitsschritte zur Durchführung notwendig sind, nämlich Abtrennen des Rohres, Aufsetzen des Verbindungsstücks, Markieren der Position des Verbindungsstücks, Abnehmen des Verbindungsstücks und Kontrolle, ob die Überschneidung ausreicht. Dann müssen einzelne dieser Schritte gegebenenfalls wiederholt und am Ende dann das Verbindungsstück auf dem Rohr befestigt werden.
Die EP 1 649 957 A1 offenbart die Merkmale des Oberbegriffs des Anspruchs 1.

### Darstellung der Erfindung

Aufgabe der vorliegenden Erfindung ist es, die Möglichkeit bereitzustellen, bei der das Montieren eines Verbindungsstücks stark vereinfacht und verkürzt wird und auch von ungelernten Hilfskräften durchgeführt werden kann.

Diese Aufgabe wird gelöst von einer Markiervorrichtung nach Anspruch 1. Weitere, die Erfindung ausgestaltende Merkmale sind in den Unteransprüchen enthalten.
Zur Lösung dieser Aufgabe umfasst eine Markiervorrichtung für einen Rohrabschneider einen Hauptkörper, ein Markierelement zum Markieren einer Rohraußenwand in einer vorbestimmten Entfernung von der Einschnittstelle, wobei das Markierelement am Hauptkörper befestigt ist, und ein Befestigungsmittel zum Befestigen des Hauptkörpers der Markiervorrichtung am Rohrabschneider. Durch eine solche Markiervorrichtung, die am Rohrabschneider befestigt ist, wird eine Markierung schon während des Abschneidens des Rohres auf die Rohraußenwand aufgebracht und so eine angemessene Überschneidungslänge definiert. Dadurch, dass diese Überschneidungslänge durch die Markiervorrichtung festgelegt wird, die wiederum von einem erfahrenen Arbeiter eingestellt werden kann, kann nicht nur jede beliebige ungelernte Hilfskraft die Markierungen auf dem Rohr in einer richtigen Entfernung aufbringen, sondern die Markierung wird auch noch gleichzeitig während des Abschneidens des Rohres aufgebracht. Da der Rohrabschneider in der Regel auch mehrmals um das Rohr komplett herum geführt wird, ist die Markierung auch auf dem gesamten Umfang des Rohres zu erkennen, und nicht beispielsweise nur auf einem kleinen Rohrabschnitt in Umfangsrichtung. Dadurch ist die Markierung auch aus jeder Perspektive gut zu erkennen.

Vorzugsweise ist das Markierelement der Markiervorrichtung federnd gelagert. D.h., das Markierelement wird gegen die Rohraußenwand gedrückt und kann so auch zuverlässig unebene Oberflächen markieren. Darüber hinaus wird auch bei abnutzbaren Markierelementen, beispielsweise Markierelemente, die mit Kreide oder in der Art eines Bleistifts mit Graphit die Markierung aufbringen, vermieden werden, dass das Markierelement nicht mehr die Rohraußenwand berührt.

Vorzugsweise umfasst das Markierelement einen Markierstift. Der Stift kann ein Gravurstift zum Einritzen einer Kerbe in die Außenwand sein, kann aber auch ein Zeichen- oder Malstift sein, der eine Markierung auf das Rohr aufmalt. Ein solcher Stift kann durch die längliche Ausgestaltung auch von einer weiter vom Rohr entfernten Markiervorrichtung zuverlässig den Kontakt mit der Rohraußenwand bereitstellen.

Der Hauptkörper kann eine oder zumindest zwei Fixierstellen aufweisen, an denen das Markierelement befestigbar ist. Dadurch können auch für verschiedene Rohre verschiedene Markierentfernungen eingestellt werden.

An der Markiervorrichtung können ferner Kennzeichnungen zur Anzeige von vorbestimmten Positionen des Markierelements vorgesehen werden. Dies ist insbesondere in Verbindung mit einem stufenlos verstellbaren Markierelement hilfreich, da insbesondere ungelernte Hilfskräfte ohne weitere Unterstützung die entsprechenden Markierungen auch an Rohren mit unterschiedlichen Durchmessern anbringen können.

Das Markierelement der Markiervorrichtung ist am Hauptkörper verstellbar, insbesondere stufenlos verstellbar gelagert, beispielsweise über eine Gewindeeinrichtung am Hauptkörper. Die Verstellbarkeit kann grundsätzlich auch in Stufen geschehen, beispielsweise über an vorbestimmten Stellen im Hauptkörper angeordneten Aussparungen, wie Löchern. Eine stufenlose Verstellbarkeit ist aber bevorzugt, beispielsweise über eine Gleitschiene, die mit einem Klemmelement zusammenwirkt und so in einer beliebigen Position verklemmt bzw. gehalten werden kann oder über eine Gewindeeinrichtung. Ein solches verstellbares Markierelement ermöglicht ein einfaches Verstellen ein und derselben Markiervorrichtung und somit eine flexible Benutzung einer einzelnen Markiervorrichtung. Eine Gewindeeinrichtung benötigt dabei noch nicht einmal eine besondere Haltevorrichtung zum Festsetzen des Markierelements in einer bestimmten Position, da für das Gewinde eine Steigung ausgewählt werden kann, die ein selbstständiges Verstellen des Markierelements verhindert (weil der Kraftaufwand zum Verschieben zu groß wäre). Es können natürlich zusätzlich zu einem Gewindeelement auch eine Drehsperre vorgesehen sein, beispielsweise ein Sperrstift, so dass ein unabsichtliches Verdrehen des Gewindes zuverlässig verhindert werden kann.

Erfindungsgemäß erstreckt sich der Hauptkörper der Markiervorrichtung zu beiden Seiten des Befestigungselements. Ferner ist auf beiden Seiten des Rohrabschneiders, der am Befestigungselement befestigt wird, ein Markierelement angebracht. So kann der Rohrabschneider an einer beliebigen Seite des Rohres aufgesetzt werden. So können zum Beispiel auch wandnahe Rohre, die nur von einer Seite zugänglich sind, problemlos bearbeitet werden, ohne dass die Markiervorrichtung am Rohrabschneide ummontiert werden müsste, da auf beiden Seiten des Rohrabschneiders eine Markiervorrichtung vorgesehen sein kann. Insbesondere kann man aber beim Schneiden eines freien Rohres gleichzeitig auf beiden Seiten der Schnittstelle Markierungen anbringen. So kann sichergestellt werden, dass beim Abtrennen eines weiteren Rohrs an dessen beiden Enden eine Markierung vorgesehen ist.
Es lässt sich aber auch eine Markiervorrichtung so ausgestalten, dass das Markierelement von der einen Seite abgenommen werden kann und an der anderen Seite des Rohrabschneiders in den Hauptkörper eingesetzt werden kann (bspw. ein Stift in einer Aussparung). Eine solch schnelle Montage ist gegenüber einem Abnehmen und umgekehrten Montieren der gesamten Markiervorrichtung zu bevorzugen.

Vorzugsweise umfasst die Markiervorrichtung als Befestigungsmittel eine Klemmvorrichtung in der Art einer Schraubzwinge, es können aber auch Klemmvorrichtungen mit Gewindestiften vorgesehen sein, die die Klemmbacken beispielsweise über Flügelschrauben gegen den Rohrabschneider verstemmen oder das Befestigungsmittel kann auch eine einfache Verschraubung sein.

Die Markiervorrichtung kann eine Schneidvorrichtung, insbesondere ein Schneidrad, zum Schneiden des Rohrs aufweisen. So wird sichergestellt, dass die Markierungen in einer vorbestimmten Entfernung zur Schneidvorrichtung vorgesehen sind, ohne dass eine Kontrolle bei der Montage der Markiervorrichtung am Rohrabschneider notwendig ist.

Die Erfindung umfasst auch einen Rohrabschneider mit einem Handgriff, einer Aufnahme für ein Rohr und eine verstellbare Gewindevorrichtung, der eine erfindungsgemäße Markiervorrichtung aufweist. Insbesondere ist diese Markiervorrichtung einstückig mit dem Rohrabschneider ausgebildet, d.h., dass eine zuverlässige und feste Verbindung zwischen Rohrabschneider und Markiervorrichtung besteht. Die einstückige Ausbildung kann daher als Befestigungsmittel im Sinne dieser Erfindung angesehen werden. Die Markiervorrichtung kann an der verstellbaren Gewindevorrichtung (110) vorgesehen sein. Eine Markiervorrichtung mit einer Schneidvorrichtung ist bevorzugt an der Stelle angebracht, an der die Schneidvorrichtung vorgesehen ist. Üblicherweise ist dies bei einem manuellen Rohrabschneider am Ende der verstellbaren Gewindestange.
Eine weitere Ausführungsform der Erfindung betrifft eine Hilfsvorrichtung zur Markierung von Rohren für einen Rohrabschneider, umfassend einen Hauptkörper, auf dem Kennzeichnungen zur Anzeige von vorbestimmten Positionen von Markierungen für verschiedene Rohrdurchmesser vorgesehen sind und ein Befestigungselement, mit dem der Hauptkörper am Rohrabschneider befestigt werden kann.

### Kurze Beschreibung der Figuren

- Figur 1: zeigt eine nicht erfindungsgemäße Markiervorrichtung;
- Figuren 2a-c: zeigen verschiedene Ansichten auf eine erfindungsgemäße Markiervorrichtung, die beidseitig des Befestigungsmittels ausgebildet ist;
- Figur 3a: zeigt eine Ansicht auf eine erfindungsgemäße Markiervorrichtung mit einer Schneidvorrichtung;
- Figur 3b: zeigt einen Gewindestift, der mit einer Markiervorrichtung aus Figur 3a verwendet werden kann;
- Figuren 4a-c: zeigen verschiedene Ansichten auf ein Markierelement, das mit einem Gewindestift verstellbar in der erfindungsgemäßen Markiervorrichtung gelagert sein kann;
- Figur 5: zeigt bekannten Rohrabschneider aus dem Stand der Technik, der mit der erfindungsgemäßen Markiervorrichtung kombinierbar ist;
- Figur 6: zeigt einen bekannten elektrischen Rohrabschneider aus dem Stand der Technik, der mit der erfindungsgemäßen Markiervorrichtung kombinierbar ist; und
- Figur 7: zeigt einen Längsschnitt durch ein Rohr auf das ein Verbindungsstück auf gesetzt ist.

### Beschreibung bevorzugter Ausführungsformen

Im Folgenden werden die Begriffe "vorne" und "hinten" verwendet um die Ausführungsformen der Erfindung zu definieren. "Vorne" ist dabei eine zum Rohr gerichtete Seite der Markiervorrichtung und "hinten" die gegenüberliegende Seite.

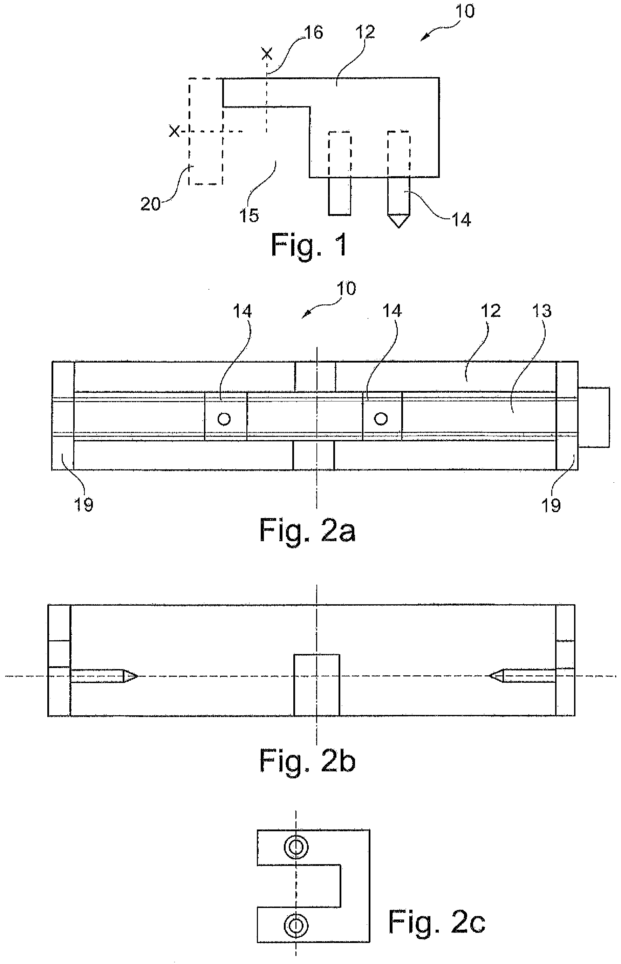

In Figur 1 ist eine nicht erfindungsgemäße Markiervorrichtung 10 für einen Rohrabschneider gezeigt. Diese Markiervorrichtung 10 umfasst einen Hauptkörper 12, ein Markierelement 14, mit dem eine Rohraußenwand in einer vorbestimmten Entfernung von der Einschnittstelle des Rohrabschneiders markiert wird und ein Befestigungsmittel 16, das in Figur 1 durch eine Verschraubung dargestellt ist. Die Verschraubung ist hier auf der Rückseite der Markiervorrichtung 10 dargestellt, kann aber auch seitlich vorgesehen sein, beispielsweise durch eine umschließende Wand 20 (in Figur 1 gestrichelt dargestellt) oder durch den Griff des Rohrabschneiders (ohne die gestrichelte Wand in Figur 1) und in den Hauptkörper der Markiervorrichtung.

In Figur 2 ist eine erfindungsgemäße Markiervorrichtung 10 gezeigt, die einen Hauptkörper aufweist, der auf beiden Seiten des Befestigungsmittels ausgebildet ist. D.h., da das Befestigungsmittel 16 am Rohrabschneider befestigt wird, können auch auf beiden Seiten des Hauptkörpers Markierelemente 14 vorgesehen sein, insbesondere so dass die Markiervorrichtung einen symmetrischen Aufbau hat.
Der Hauptkörper 12 ist im Prinzip beliebig ausgebildet, vorliegend als rechteckförmiger Körper, an dem Befestigungsmittel 16 und Markierelemente 14 vorgesehen sind. Markierelemente können sehr simpel ausgestaltet sein, können aber durch auch komplexere Baugruppen ausgeführt werden.
Das Markierelement 14 kann einstückig mit dem Hauptkörper 12 vorgesehen sein, beispielsweise als Dorn, der von dem Hauptkörper 12 hervorsteht, vorzugsweise ist das Markierelement 14 jedoch lösbar am Hauptkörper 12 befestigt. Beispielsweise können in dem Hauptkörper Aussparungen, wie Löcher, vorgesehen sein, die in Figur 1 durch gestrichelte Linien dargestellt sind. In diese Löcher können dann entsprechende Markierstifte eingesetzt werden. Die Markierstifte können selbst als Gravurstift ausgebildet sein, die eine Ritze in die Außenwand einkerben können, die Stifte können aber auch als Malstifte ausgebildet sein, so dass die Markierung auf die Rohraußenwand aufgemalt wird. Mit Gravurstiften oder schmalen Zeichenstiften kann allerdings im Vergleich zu dicken Markierstiften mit Kreide eine genauere Markierung angezeichnet werden. Die Stifte können beispielsweise in ein Loch oder in verschiedene Löcher im Hauptkörper eingesetzt sein und beispielsweise über eine entsprechende Passung oder ein passendes Befestigungselement im Loch gehalten werden (Gummiring um den Markierstift, der mit der Innenwand des Lochs zusammenwirkt, um den Markierstift im Loch zu halten). Der Stift kann auch selbst kleine Vorsprünge aufweisen, die verhindern dass der Stift aus einem Loch herausfällt, indem er bspw. an entsprechenden Anschlägen gehalten wird. Eine nachfolgend beschriebene Abdeckplatte ist ebenfalls möglich.

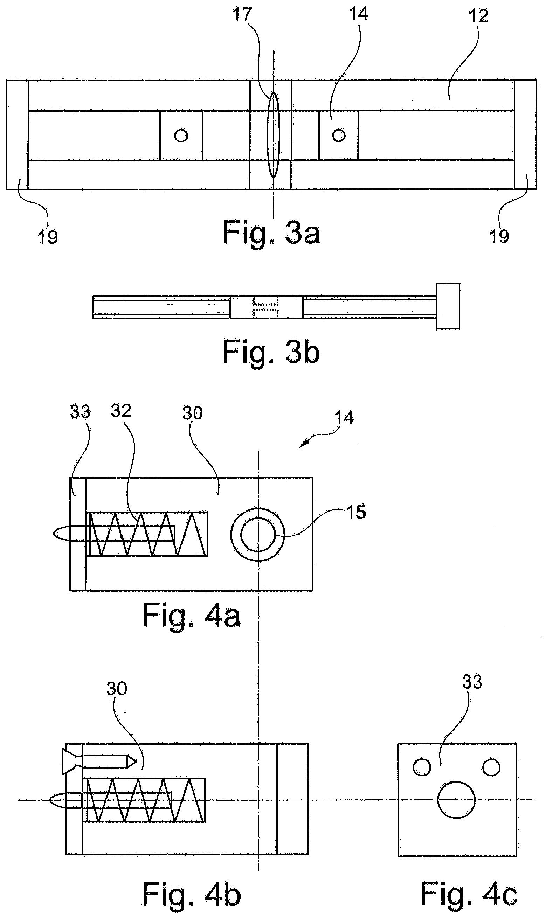

Das Markierelement 14 ist vorzugsweise federnd gelagert, so dass es in Richtung des zu markierenden Rohres gedrückt wird. Beispielsweise kann am Boden jeder Aussparung ein Federelement angeordnet sein, das den Stift aus der Aussparung herausdrückt. In Verbindung mit der gerade erwähnten Anschlagslösung wird mit einer gefederten Lagerung des Markierstifts sichergestellt, dass der Stift nicht aus Versehen von der Feder komplett aus der Halterung gedrückt wird. Das Markierelement 14 kann aber auch stufenlos verstellbar an dem Hauptkörper 12 gelagert sein, beispielsweise über ein Gewindeelement/Gewindestift 13, das sich entlang des Hauptkörpers 12 erstreckt und auf dem ein Körper/Reiter 30 mit Innengewinde 31 sitzt, der sich durch Drehen des Gewindestifts 13 seitlich entlang des Gewindeelements 13 bewegen lässt (siehe Figuren 4a bis c). Dieser Innengewindekörper 30 ist vorzugsweise derart am Hauptkörper 12 gelagert, dass er sich nicht relativ zum Hauptkörper 12 verdrehen kann und so durch verdrehen des Gewindeelements 13 entlang des Gewindeelements 13 bewegt wird. Vorliegend wird dies durch die äußere insbesondere quadratische oder rechteckige Form des Innengewindekörpers erreicht. Bei einer beidseitigen, insbesondere symmetrischen Anordnung der Markierelemente 14 können jeweils ein Gewindeelement 13 für jede Seite eingesetzt werden, so dass die beiden Seiten unabhängig voneinander eingestellt werden können. Vorzugsweise ist jedoch ein einzelnes Gewindeelement 13 für beide Markierelemente 14 vorgesehen. Dieses Gewindeelement 13 weist dann zwei gegenläufige Gewinde auf, so dass sich die Markierelemente 14 entgegengesetzt bewegen, wenn der Gewindestift gedreht wird. Dadurch können beide Markierelemente 14 auf beiden Seiten gleichzeitig eingestellt werden, insbesondere automatisch in eine zueinander symmetrische Position in Bezug auf die Mitte der Markiervorrichtung. Der Gewindestift ist dabei im Hauptkörper gelagert, vorzugsweise an den Seitenwänden 19.
Der Innengewindekörper 30 weist ebenfalls Federelemente 32 auf, die einen Markierstift federnd lagern. Der Markierstift und die Federn 32 werden dabei in eine Aussparung eingesetzt und mit einer Abdeckplatte 33 im Markierelement 14 befestigt. Die Abdeckplatte 33 wird bspw. mit Schrauben oder Nieten befestigt.

Auf oder in diesem Innengewindekörper ist dann das Markierelement gelagert, so dass ein stufenloses Verstellen des Markierelements ermöglicht wird. Auch hier kann das Markierelement federnd an dem Innengewindekörper gelagert sein, so dass das Markierelement gegen die Rohraußenwand gedrückt wird.

Eine andere Möglichkeit, eine stufenlose Verstellbarkeit zu erreichen, wäre, das Markierelement 14 in einer Art Schiene, beispielsweise einer Nut entlang des Hauptkörpers laufen zu lassen und das Markierelement dann an der gewünschten Stelle mit einer Klemmvorrichtung (nicht gezeigt) festzusetzen. Diese Klemmvorrichtung kann beispielsweise über eine federnd gelagerte Klemmplatte befestigt werden oder einfach über eine Druckschraube, die das bewegliche Markierelement am Hauptkörper feststemmt.
Das Befestigungsmittel 16 ist vorzugsweise eine bloße Schraube, kann aber auch eine Klemmvorrichtung in der Art einer Schraubzwinge sein. In Figur 1 kann dies beispielsweise mit der zusätzlichen Außenwand 20 ausgeführt werden, indem auf einer Seite über einen Gewindestift der in der Aufnahme 15 gelegene Rohrabschneider 100 gegen die Außenwand 20 gedrückt wird und so festgeklemmt wird. In der in Figur 2 dargestellten Ausführungsform kann dies auch über beidseitig angeordnete Gewindestifte erreicht werden (nicht gezeigt). Selbstverständlich kann die Markiervorrichtung aber auch am Rohrabschneider verschweißt oder verklebt, oder der Rohrabschneider einstückig mit der Markiervorrichtung hergestellt werden. Bei einer einstückigen Ausführung/Herstellung ist das Befestigungsmittel dann implizit gegeben.

Die Markiervorrichtung 14 kann prinzipiell an allen Stellen des Rohrabschneiders montiert werden. Ideal ist für den gezeigten Rohrabschneider aber der Eingriffsbereich, der direkt am Rohr anliegt. Aber auch am Handgriff nahe am Eingriffsbereich könnte die Markiervorrichtung angeordnet werden, sofern das Markierelement so ausgestaltet ist, dass es das Rohr immer noch erreicht.

Die Markiervorrichtung 10 kann bevorzugt auch an der Gewindespindel eines Rohrabschneiders 100 angebracht werden, so dass die Markiervorrichtung 10 automatisch zusammen mit der Schneideinheit 104 bewegt wird und beide immer im gleichen Abstand zueinander gehalten werden. Dadurch wird eine zuverlässige Markierfunktion sichergestellt, da die Markiervorrichtung immer in der richtigen Position in Bezug auf die Schneideinheit ausgerichtet ist.

Alle oben genannten Ausführungsformen der Markiervorrichtung können auch mit einem Schneidrad 17 kombiniert werden (siehe Figur 3). Dies ist insbesondere in Kombination mit der an der Gewindespindel angebrachten Markiervorrichtung äußerst vorteilhaft, da dann die Abstände der Markierungen in Bezug auf die Schneideinheit sehr zuverlässig festgelegt werden können. Die Befestigung der Markiervorrichtung an der Gewindespindel kann auf herkömmliche Weise ausgeführt werden, so dass das im Stand der Technik bekannte Schneidrad einfach durch eine Markiervorrichtung mit Schneidrad ersetzt wird. Wenn die Markiervorrichtung 10 ein Schneidrad 17 und auch ein verstellbares Markierelement mit Gewindeelement 13 aufweist und, dann kann das Schneidrad auf dem Gewindeelement 13 gelagert sein. Dafür kann das Gewindeelement, insbesondere der Gewindestift 13 vorteilhafterweise einen Bereich ohne Gewinde aufweisen. Um einen besseren seitlichen Halt zu gewährleisten, kann auch eine Aussparung als Sitz für das Schneidrad vorgesehen sein (siehe die gestrichelte Linie in Figur 3b). Eine weitere Ausführungsform einer Markiervorrichtung 10 weist am Hauptkörper 12 Kennzeichnungen für bestimmte Entfernungen (nicht gezeigt) und ein Markierelement 14 auf, so dass beim stufenlosen Einstellen beispielsweise die richtige Entfernung leichter eingestellt werden kann. Es ist aber auch möglich, auf ein Markierelement 14 zu verzichten und lediglich die Markiervorrichtung 10 mit den Kennzeichnungen zu versehen, und dann beim Rohrabschneiden manuell mit einem Markierstift die entsprechende Entfernung anzuzeichnen.

Die oben genannten Ausführungsformen können selbstverständlich auch an einem elektrischen Rohrabschneider angewendet werden. Der einzige Unterschied besteht dann in der elektrischen Ausführung des Rohrabschneiders, der dem Fachmann bekannt ist.

## Patentansprüche

1. Markiervorrichtung (10) für einen Rohrabschneider, umfassend einen Hauptkörper (12);
ein Markierelement (14) zum Markieren einer Rohraußenwand in einer vorbestimmten Entfernung von der Einschnittsstelle des Rohrabschneiders, wobei das Markierelement (14) am Hauptkörper (12) befestigt ist; und
ein Befestigungsmittel zum Befestigen des Hauptkörpers der Markiervorrichtung am Rohrabschneider;
**dadurch gekennzeichnet, dass**
der Hauptkörper sich zu beiden Seiten des Befestigungsmittels erstreckt und auf beiden Seiten des Befestigungsmittels ein Markierelement vorgesehen ist.

2. Markiervorrichtung nach Anspruch 1, bei dem das Markierelement federnd gelagert ist.

3. Markiervorrichtung nach Anspruch 1 oder 2, bei dem das Markierelement einen Markierstift umfasst.

4. Markiervorrichtung nach einem der vorhergehenden Ansprüche, bei dem der Hauptkörper zumindest zwei Fixierstellen aufweist, an denen das Markierelement fixierbar ist.

5. Markiervorrichtung nach einem der vorhergehenden Ansprüche, ferner umfassend Kennzeichnungen zur Anzeige von vorbestimmten Positionen des Markierelements.

6. Markiervorrichtung nach einem der vorhergehenden Ansprüche, bei denen das Markierelement am Hauptkörper verstellbar, insbesondere stufenlos verstellbar gelagert ist.

7. Markiervorrichtung nach Anspruch 6, bei dem das Markierelement zur stufenlosen Verstellbarkeit über eine Gewindeeinrichtung am Hauptkörper befestigt ist.

8. Markiervorrichtung nach einem der vorhergehenden Ansprüche, bei dem das Befestigungsmittel eine Klemmvorrichtung umfasst.

9. Markiervorrichtung nach einem der vorhergehenden Ansprüche, ferner umfassend eine Schneidvorrichtung zum Schneiden des Rohrs.

10. Rohrabschneider mit einem Handgriff, einer Aufnahme für ein Rohr und eine verstellbare Gewindevorrichtung, ferner umfassend eine Markiervorrichtung nach einem der vorhergehenden Ansprüche.

11. Rohrabschneider nach Anspruch 10, wobei der Rohrabschneider einstückig mit der Markiervorrichtung ausgebildet ist.

12. Rohrabschneider nach Anspruch 10 oder 11, bei der die Markiervorrichtung an der verstellbaren Gewindevorrichtung (110) vorgesehen ist.

## Claims

1. A marking device (10) for a tube separator comprising a main body (12);
a marking element (14) for marking an outer wall of a pipe at a predetermined distance from the incision of the tube separator, wherein the marking element (14) is fixed to the main body (12); and
a fastener for fastening the main body of the marking device to the tube separator;
**characterized in that**
the main body extends to both sides of the fastener and a marking element is provided on both sides of the fastener.

2. The marking device according to claim 1, wherein the marking element is springloaded.

3. The marking device according to claim 1 or 2, wherein the marking element comprises a marking pen.

4. The marking device according to any one of the preceding claims, wherein the main body has at least two fixing points at which the marking element can be fixed.

5. The marking device according to any one of the preceding claims further comprising markings for indicating predetermined positions of the marking element.

6. The marking device according to any one of the preceding claims, wherein the marking element is adjustably, in particular steplessly adjustably, mounted on the main body.

7. The marking device according to claim 6, wherein the marking element is attached to the main body via a threaded device for stepless adjustability.

8. The marking device according to any one of the preceding claims, wherein the fastener comprises a clamping device.

9. The marking device according to any one of the preceding claims further comprising a cutting device for cutting the tube.

10. A tube separator having a handle, a receptacle for a tube and an adjustable threading device, further comprising a marking device according to any one of the preceding claims.

11. The tube separator according to claim 10, wherein the tube separator is integrally formed with the marking device.

12. The tube separator according to claim 10 or 11, wherein the marking device is provided on the adjustable threading device (110).

## Revendications

1. Dispositif de marquage (10) pour un séparateur de tubes comprenant un corps principal (12);
un élément de marquage (14) pour marquer une paroi extérieure d'un tube à une distance prédéterminée de l'incision du séparateur de tubes, dans lequel l'élément de marquage (14) est fixé au corps principal (12); et
une fixation pour fixer le corps principal du dispositif de marquage au séparateur de tubes;
**caractérisé en ce que**
le corps principal s'étend des deux côtés de la fixation et un élément de marquage est prévu des deux côtés de la fixation.

2. Dispositif de marquage selon la revendication 1, dans lequel l'élément de marquage est chargé par ressort.

3. Dispositif de marquage selon la revendication 1 ou 2, dans lequel l'élément de marquage comprend un marqueur.

4. Dispositif de marquage selon l'une quelconque des revendications précédentes, dans lequel le corps principal comporte au moins deux points de fixation sur lesquels l'élément de marquage peut être fixé.

5. Dispositif de marquage selon l'une quelconque des revendications précédentes comprenant en outre des marquages pour indiquer des positions prédéterminées de l'élément de marquage.

6. Dispositif de marquage selon l'une quelconque des revendications précédentes, **caractérisé en ce que** l'élément de marquage est monté de manière réglable, en particulier réglable en continu, sur le corps principal.

7. Dispositif de marquage selon la revendication 6, dans lequel l'élément de marquage est fixé au corps principal par l'intermédiaire d'un dispositif fileté pour un réglage en continu.

8. Dispositif de marquage selon l'une quelconque des revendications précédentes, dans lequel la fixation comprend un dispositif de serrage.

9. Dispositif de marquage selon l'une quelconque des revendications précédentes comprenant en outre un dispositif de coupe pour couper le tube.

10. Séparateur de tube ayant une poignée, un réceptacle pour un tube et un dispositif de filetage réglable, comprenant en outre un dispositif de marquage selon l'une quelconque des revendications précédentes.

11. Séparateur de tubes selon la revendication 10, dans lequel le séparateur de tubes est formé d'un seul tenant avec le dispositif de marquage.

12. Séparateur de tubes selon la revendication 10 ou 11, le dispositif de marquage étant prévu sur le dispositif de filetage réglable (110).
